# EUROPÄISCHE PATENTSCHRIFT

(11) **EP 3 251 490 B1**
(45) Veröffentlichungstag und Bekanntmachung des Hinweises auf die Patenterteilung: **15.08.2018**
(21) Anmeldenummer: 16172928.0
(22) Anmeldetag: 03.06.2016
(51) Int. Cl.: A01D 78/10, A01B 73/04

(54) **KLAPPUNG UND TRANSPORTVERRIEGELUNG**
FOLDING AND LOCKING MECHANISM
MÉCHANISM DE PLIAGE ET DE VERROUILLAGE

(43) Veröffentlichungstag der Anmeldung: 06.12.2017
(73) Patentinhaber: Kverneland Group Kerteminde A/S, 5300 Kerteminde (DK)
(72) Erfinder: Gohl, Stefan, 78244 Gottmadingen (DE); Kobler, Christian, 78224 Singen (DE); Hirt, Christian, 78086 Brigachtal (DE)
(74) Vertreter: Grünecker Patent- und Rechtsanwälte PartG mbB

(56) Entgegenhaltungen:
- EP-A1- 0 834 247
- EP-A1- 3 000 298
- DE-U1- 20 011 429

## Beschreibung

Die Erfindung betrifft eine Heuwerbungsmaschine sowie ein Verfahren gemäß den Oberbegriffen der Ansprüche 1 und 12.

Solche Heuwerbungsmaschinen sind beispielsweise bereits aus der EP 2446730 A1, EP 2520147 B1, DE 200 11 429 U1 oder EP 1440615 B1 bekannt. Für eine effektive Arbeit der Heuwerbungsmaschine ist die Arbeitsbreite, d.h. diejenige Breite quer zur Fahrtrichtung, die von den Arbeitswerkzeugen überstrichen wird, viel breiter als dies für einen Transport über öffentliche Straßen zugelassen ist. Aus diesem Grund müssen Rahmenteile der Maschine nach oben bzw. nach oben und innen verschwenkt werden, so dass die Breite der Landmaschine die zulässige Höchstbreite für den Verkehr auf öffentlichen Straßen nicht übersteigt. Die Mechanismen, um die verschiedenen Seitenrahmenabschnitte einer Heuwerbungsmaschine von einer Arbeitsposition in eine Nicht-Arbeitsposition bzw. Transportposition zu verbringen, sind oftmals kompliziert. Insbesondere benötigt man zum Verstellen eines mittleren Seitenrahmenabschnitts in Relation zu einem inneren Seitenrahmenabschnitt spezielle Hubzylinder und Verriegelungsmechanismen, was die Maschinen kompliziert und aufwendig macht.

Hiervon ausgehend liegt der vorliegenden Erfindung die Aufgabe zugrunde, eine verbesserte Heuwerbungsmaschine und ein entsprechend vereinfachtes Verfahren bereitzustellen, mit dem ein äußerer Seitenrahmenabschnitt von einer Arbeitsposition in eine Transportposition gebracht werden kann.

Erfindungsgemäß wird die Aufgabe durch die Merkmale der Ansprüche 1 und 12 gelöst.

Gemäß der vorliegenden Erfindung ist ein Arretiermechanismus vorgesehen mit einem länglichen Arretierelement, das sich vom inneren Seitenrahmenabschnitt zum äußeren Seitenrahmenabschnitt erstreckt. Beim Hochklappen des äußeren Seitenrahmenabschnitts von einer Arbeitsposition in eine Transportposition bzw. Nichtarbeitsstellung wird der innere Seitenrahmenabschnitt gegen den mittleren Seitenrahmenabschnitt automatisch mechanisch verriegelt, wobei das längliche Arretierelement durch den äußeren Seitenrahmenabschnitt nach innen in eine Verriegelungsposition verschoben wird. Das heißt, dass der äußere Seitenrahmenabschnitt eine Kraft auf das längliche Arretierelement ausübt. Dies bringt den Vorteil mit sich, dass alleine durch die Bewegung des äußeren Seitenrahmenabschnitts eine Verriegelung erfolgt, ohne dass der Landwirt die entsprechenden Rahmenabschnitte von Hand verriegeln muss. Da die Verriegelung automatisch erfolgt, kann sie auch nicht vergessen werden, was die Sicherheit der Maschine wesentlich erhöht.

In dieser Anmeldung wird unter innen bzw. nach innen eine Richtung zum Mittelrahmen hin verstanden, während unter dem Ausdruck außen bzw. nach außen eine Richtung vom Mittelrahmen weg verstanden wird. Unter Transport bzw. Nichtarbeitsstellung versteht man hier eine Position in der der äußere Seitenrahmenabschnitt um etwa 180° um ein Gelenk zwischen dem mittleren Seitenrahmenabschnitt und dem äußeren Seitenrahmenabschnitt zum mittleren Seitenrahmenabschnitt verschwenkt wurde.

Beim Zurückklappen des äußeren Seitenrahmenabschnitts von der Transport- oder Nichtarbeitsstellung in die Arbeitsstellung wird die Verriegelung wieder automatisch mechanisch freigegeben.Der Arretiermechanismus umfasst gemäß einem bevorzugten Ausführungsbeispiel ein Verriegelungsblech und eine daran befestigte Schubstange. Die Schubstange ist an der nach außen gewandten Seite des Verriegelungsblechs angeordnet. Somit kann beim Hochklappen des äußeren Seitenrahmenabschnitts die Schubstange das Verriegelungsblech nach innen in eine Verriegelungsposition verschieben, derart, dass der innere Seitenrahmenabschnitt gegen den mittleren Seitenrahmenabschnitt mechanisch verriegelt wird, d.h. dass die beiden Rahmenabschnitte nicht mehr über das dazwischen liegende Gelenk gegeneinander verschwenkt werden können.

Vorzugsweise weist das Verriegelungsblech mit der daran befestigten Schubstange z.B. eine Länge auf, die länger als die Länge des mittleren Seitenrahmenabschnitts ist und die insbesondere in einem Bereich von 1,5 bis 3,0 m liegt. (Wobei hier eine Länge in Horizontalrichtung betrachtet wird, wenn sich der äußere Seitenrahmenabschnitt in einer Arbeitsposition befindet) Diese Länge entspricht also einer Länge, derart, dass sich das Arretierelement von einem inneren Ende des äußeren Seitenrahmenabschnitts bis zu einem äußeren Ende des inneren Seitenrahmenabschnitts erstrecken kann, d.h. beidseitig über den mittleren Seitenrahmenabschnitt hinaus.

Gemäß einem bevorzugten Ausführungsbeispiel ist die Schubstange an ihrem vom Verriegelungsblech abgewandten Ende über eine erste Führungseinrichtung mit dem äußeren Seitenrahmenabschnitt verbunden. Somit kann die Führungsstange durch die Bewegung des äußeren Seitenrahmenabschnitts entsprechend bewegt werden.

Das Verriegelungsblech ist über eine zweite Führungseinrichtung mit dem inneren Seitenrahmenabschnitt verbunden. Das Verriegelungsblech ist über eine dritte Führungseinrichtung mit dem mittleren Seitenrahmenabschnitt verbunden. Somit kann über die Klappbewegung des äußeren Seitenrahmenabschnitts die Schubstange und das Verriegelungsblech bewegt werden und über diese Bewegung auch beispielsweise der mittlere und innere Seitenrahmenabschnitt (z.B. über Bolzen in Aussparungen im Verriegelungsblech) mit bewegt werden. Vorteilhafterweise weist die Heuwerbungsmaschine noch eine vierte Führungseinrichtung auf, die zwischen der ersten und zweiten Führungseinrichtung angeordnet ist.

Unter Führungseinrichtung versteht man in dieser Anmeldung beispielsweise eine Aussparung in der Schubstange oder dem Verriegelungsblech, in der ein Bolzen der unterschiedlichen Seitenrahmenabschnitte bei Bewegung der Schubstange bzw. des Verriegelungsblech, geführt wird, derart, dass auch die Bewegung der Schubstange auf die gelenkig miteinander verbundenen Seitenrahmenabschnitte übertragen werden kann .

Die erste Führungseinrichtung umfasst beispielsweise ein Langloch in der Schubstange, in dem ein Bolzen des äußeren Rahmenabschnitts geführt wird, wobei der Bolzen exzentrisch zu dem Drehgelenk zwischen dem mittleren und äußeren Seitenrahmenabschnitt angeordnet ist. So kann die Schubstange über eine Exzenterkurve während des Hochklappens des äußeren Seitenrahmenabschnitts verschoben werden.

Die dritte Führungseinrichtung umfasst beispielsweise ein Langloch im Verriegelungsblech, in dem ein Bolzen des mittleren Rahmenabschnitts geführt wird.

Die zweite Führungseinrichtung umfasst beispielsweise ein Langloch, in dem ein Bolzen des inneren Seitenrahmenabschnitts geführt wird.

Die vierte Führungseinrichtung umfasst eine Führungsöffnung mit einem Langlochabschnitt und einen erweiterten Abschnitt, dessen Höhe sich nach innen, d.h. in Richtung Mittelrahmen erweitert, wobei ein Bolzen des inneren und/oder mittleren Seitenrahmenabschnitts in die Öffnung vorsteht. Vorzugsweise ist der Bolzen ein Gelenkbolzen des Gelenks zwischen dem inneren und mittleren Seitenrahmenabschnitt, d.h., dass sich der mittlere Seitenrahmenabschnitt und der innere Seitenrahmenabschnitt diese Führungseinrichtung mit diesem Bolzen teilen. Eine entsprechende Anordnung kann besonders platzsparend und einfach realisiert werden. Der Bolzen der vierten Führungseinrichtung liegt vorzugsweise tiefer als der Bolzen der zweiten Führungseinrichtung und auch weiter außen. Dadurch, dass die Führungsöffnung der vierten Führungseinrichtung nicht als Langloch ausgebildet ist, sondern sich nach innen hin erweitert, hat der Bolzen im inneren Bereich ausreichend Spiel für Gelenkbewegungen, wenn sich das Verriegelungsblech nicht in einer Verriegelungsposition befindet. So ermöglicht die Dreipunktlagerung (Bolzen der zweiten Führungseinrichtung, der dritten Führungseinrichtung und der vierten Führungseinrichtung) ein Verriegeln des inneren und mittleren Seitenrahmenabschnitts.

Die Führungseinrichtungen sind derart ausgebildet, dass bei einer Schwenkbewegung des äußeren Seitenrahmenabschnitts nach oben ab einem ersten Klappwinkel, insbesondere von 70 bis 120° die Schubstange nach innen geschoben wird und sich dabei aufgrund der Gewichtskraft des äußeren Seitenrahmenabschnitts , die auf den inneren Seitenrahmenabschnitt wirkt sowie aufgrund der Führungseinrichtungen, der mittlere Seitenrahmenabschnitt um das Gelenk zwischen dem inneren und mittleren Seitenrahmenabschnitt um einen Winkel β von 3°-20°, insbesondere 5 bis 15° d.h. relativ zum inneren Seitenrahmenabschnitt nach unten verschwenken kann.

Entsprechendes ist besonders vorteilhaft, da allein durch die Bewegung des äußeren Seitenrahmenabschnitts der mittlere Seitenrahmenabschnitt in Relation zum inneren Seitenrahmenabschnitt verschwenkt werden kann, ohne dass ein spezieller Hubzylinder etc. nötig ist. Somit kann ein Tragrohr des mittleren Seitenrahmenabschnitts auf einfache Art und Weise nach unten ausgesteift werden. Dem Arretiermechanismus kommen somit mehrere Funktionen zu, d.h. eine Verriegelungsfunktion, und darüber hinaus auch ein Verschwenken des mittleren Seitenrahmenabschnitts nach unten.

Der äußere Seitenrahmenabschnitt kann mehrere, z.B. zwei Seitenrahmen umfassen, die wiederum über ein Gelenk miteinander verbunden sind.

Der innere Seitenrahmenabschnitt wird gegen den mittleren Seitenrahmenabschnitt mechanisch verriegelt, wenn das Verriegelungsblech von der Schubstange in eine Verriegelungsposition verschoben wurde. Unter Verriegelungsposition versteht man hier eine Position, in der der mittlere Seitenrahmenabschnitt nicht mehr gegen den inneren Seitenrahmenabschnitt durch das dazwischen liegende Gelenk verschwenkt werden kann. In der Verriegelungsposition liegen die Bolzen der zweiten, dritten und vierten Führungseinrichtung so in entsprechenden Öffnungen des Verrieglungsblechs, dass die Seitenrahmenabschnitte nicht mehr gegeneinander bewegbar sind, d.h. die Bewegung blockieren. Die Verriegelung ist gemäß einem bevorzugten Ausführungsbeispiel dann erreicht, wenn beispielsweise der Bolzen der vierten Führungseinrichtung in seiner Verriegelungsposition in dem Langlochabschnitt zu liegen kommt.

Bei dem erfindungsgemäßen Verfahren zum Klappen einer Heuwerbungsmaschine nach mindestens einem der Ansprüche 1-12 von einer Arbeitsstellung in eine Transportstellung wird beim Hochklappen des äußeren Seitenrahmenabschnitts der innere Seitenrahmenabschnitt gegen den mittleren Seitenrahmenabschnitt automatisch mechanisch verriegelt.

Bei der Schwenkbewegung des äußeren Seitenrahmenabschnitts nach oben wird ab einem ersten Klappwinkel α, insbesondere von 70 bis 120°, die Schubstange des Arretiermechanismus so geführt, dass sie nach innen geschoben wird und sich dabei der mittlere Seitenrahmenabschnitt um das Gelenk zwischen dem inneren und mittleren Seitenrahmenabschnitt um einen Winkel β von 3°-20°, insbesondere 5° bis15° nach unten verschwenkt, bis das Verriegelungsblech in eine Verriegelungsposition gebracht wird.

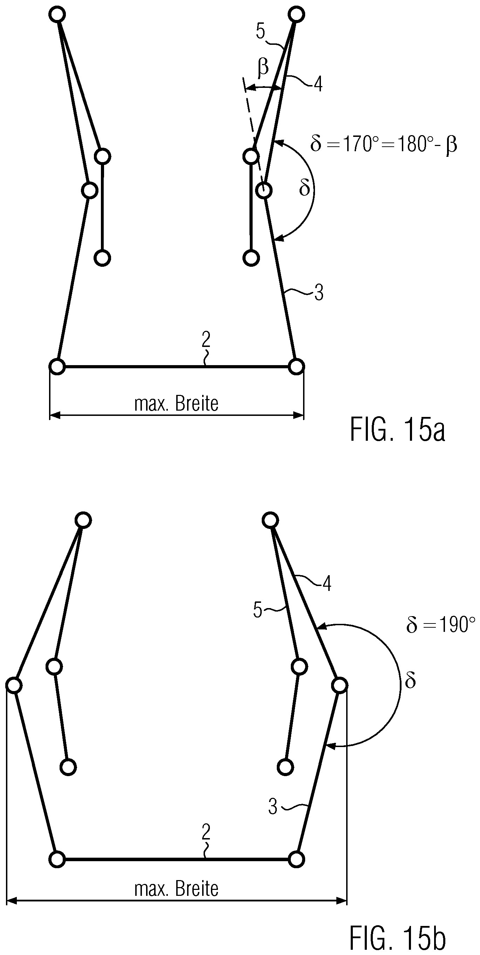

Dass sich der mittlere Seitenrahmenabschnitt um den Winkel β nach unten verschwenkt, bringt den Vorteil mit sich, dass beim nach oben Klappen des inneren und mittleren Seitenrahmenabschnitts um ein Gelenk zwischen dem Mittelrahmen und dem inneren Seitenrahmenabschnitt die Transportbreite in der Endtransportstellung erheblich reduziert werden kann (siehe auch Fig. 15a im Vergleich mit Fig. 15b).

Beim Hochklappen des äußeren Seitenrahmenabschnitts läuft der Bolzen in dem Langloch der ersten Führungseinrichtung zu dem nach innen gewandten Ende des Langlochs. Die Stange wird durch die Bewegung des Bolzens nach innen verschoben, wobei sich das Verriegelungsblech derart nach innen verschiebt, dass sich die Position der Bolzen der zweiten und dritten Führungseinrichtung relativ zum äußeren Ende der Langlöcher hin bewegt und die Position des Bolzen der vierten Führungseinrichtung sich in eine Verriegelungsposition, insbesondere in den Langlochabschnitt der Führungsöffnung bewegt.

Wenn der äußere Seitenrahmenabschnitt um einen Winkel α von 100°-170° verschwenkt wurde, ist die Verriegelungsposition erreicht. Der Seitenrahmenabschnitt kann dann noch vollständig, d.h. bis um etwa 180°, weiter verschwenkt werden, wobei sich der mittlere und innere Seitenrahmenabschnitt nicht mehr zueinander bewegen.

Die vorliegende Erfindung wird nachfolgend unter Bezugnahme der folgenden Figuren näher erläutert.
- Fig. 1: zeigt eine vordere Teilansicht einer Heuwerbungsmaschine gemäß der vorliegenden Erfindung in Arbeitsposition.
- Fig. 2: zeigt eine Teilansicht der in Figur eins gezeigten erfindungsgemäßen Heuwerbungsmaschine, bei der der äußere Seitenrahmenabschnitt um 55° nach oben verschwenkt wurde.
- Fig. 3: zeigt einen vergrößerten Ausschnitt der Fig. 2.
- Fig. 4: zeigt einen vergrößerten Ausschnitt der Arretiervorrichtung der Fig. 3.
- Fig. 5: zeigt einen Teil einer Heuwerbungsmaschine, bei der der äußere Seitenrahmenabschnitt um 110° nach oben verschwenkt wurde.
- Fig. 6: zeigt einen vergrößerten Ausschnitt des Arretierungsmechanismus der Fig. 5.
- Fig. 7: zeigt eine Teilansicht der Heuwerbungsmaschine, bei der der äußere Seitenrahmenabschnitt um 150° nach oben verschwenkt wurde.
- Fig. 8: zeigt einen vergrößerten Ausschnitt des Arretierungsmechanismus der Fig. 7.
- Fig. 9: zeigt eine Teilansicht der Heuwerbungsmaschine, bei der der innere Seitenrahmenabschnitt um 165° nach oben verschwenkt wurde.
- Fig. 10: zeigt einen vergrößerten Ausschnitt des Arretierungsmechanismus.
- Fig. 11: zeigt eine Teilansicht der erfindungsgemäßen Heuwerbungsmaschine, bei der der äußere Seitenrahmenabschnitt um 180° verschwenkt wurde.
- Fig. 12: zeigt eine vergrößerte Darstellung des in Fig. 11 gezeigten Arretierungsmechanismus.
- Fig. 13: zeigt eine perspektivische Darstellung eines Teiles der in Figur 1 gezeigten Heuwerbungsmaschine.
- Fig. 14: zeigt die erfindungsgemäße Heuwerbungsmaschine in einer Endtransportstellung.
- Fig. 15a: zeigt grob schematisch die erfindungsgemäße Heuwerbungsmaschine in einer Endtransportstellung bei einem Winkel β von 10°.
- Fig. 15b: entspricht der in Fig. 15a dargestellten Heuwerbungsmaschine mit einem Winkel δ von 190°.

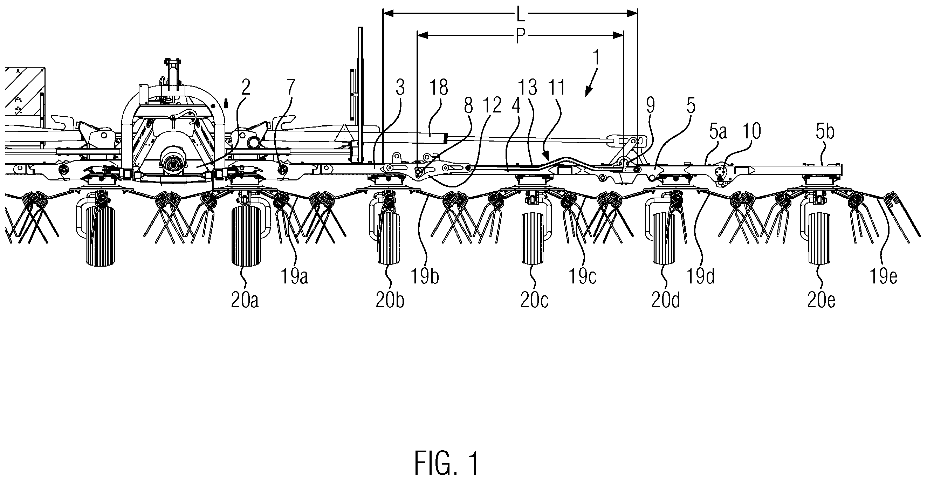

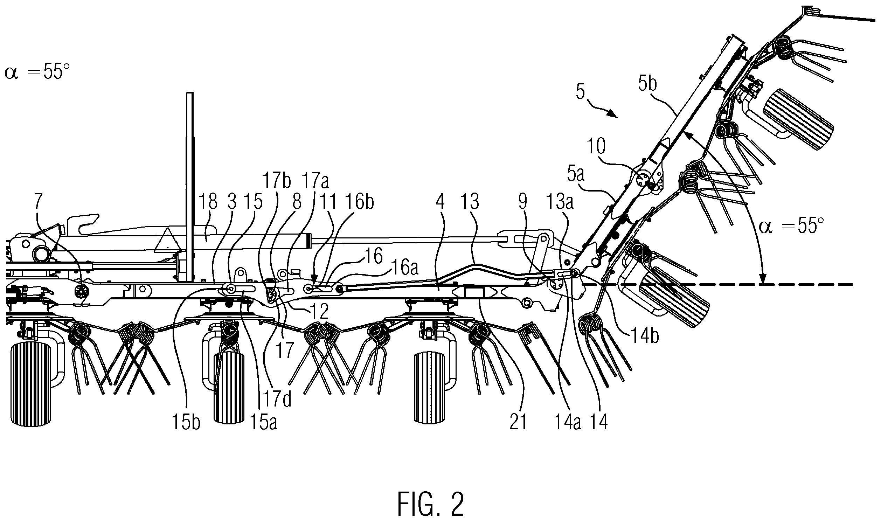

Fig. 1 ist eine Teilansicht einer erfindungsgemäßen Heuwerbungsmaschine 1 in Arbeitsposition gemäß einem bevorzugten Ausführungsbeispiel. Die Heuwerbungsmaschine 1 weist einen Mittelrahmen 2 auf sowie in Transportrichtung betrachtet, links und rechts, also beidseitig, mehrere über Gelenke 7, 8, 9 verbundene Seitenrahmenabschnitte 3,4,5. Die Seitenrahmenabschnitte sind über die Gelenke zueinander verschwenkbar, wobei die Gelenkachsen sich im Wesentlichen senkrecht zu den Seitenrahmenabschnitten erstrecken. Über das Gelenk 7 schließt sich der innere Seitenrahmenabschnitt 3 an den Mittelrahmen 2 an. An den inneren Seitenrahmenabschnitt schließt sich über das Gelenk 8 der mittlere Seitenrahmenabschnitt 4 an. Über das Gelenk 9 schließt sich schließlich der äußere Seitenrahmenabschnitt 5 an, der, wie insbesondere aus Fig. 1 und Fig. 2 hervorgeht, zusammengesetzt ist aus zwei Seitenrahmen 5a, 5b, die wiederum über das Gelenk 10 miteinander verbunden sind. An dem Mittelrahmen 2, dem inneren Seitenrahmenabschnitt 3 und dem mittleren Seitenrahmenabschnitt 4 ist jeweils ein Arbeitsorgan , hier ein Zinkenkreisel 19a, 19b, 19c angeordnet. Der äußere Seitenrahmenabschnitt 5 weist an seinen beiden Rahmen 5a, b ebenfalls jeweils einen Zinkenkreisel 19d, 19e auf. Der Mittelrahmen 2 weist das Laufrad 20a auf, der innere Seitenrahmenabschnitt 3, der mittlere Seitenrahmenabschnitt 4, der Seitenrahmen 5a und der Seitenrahmen 5b weisen auch jeweils ein Laufrad 20a-20e auf.

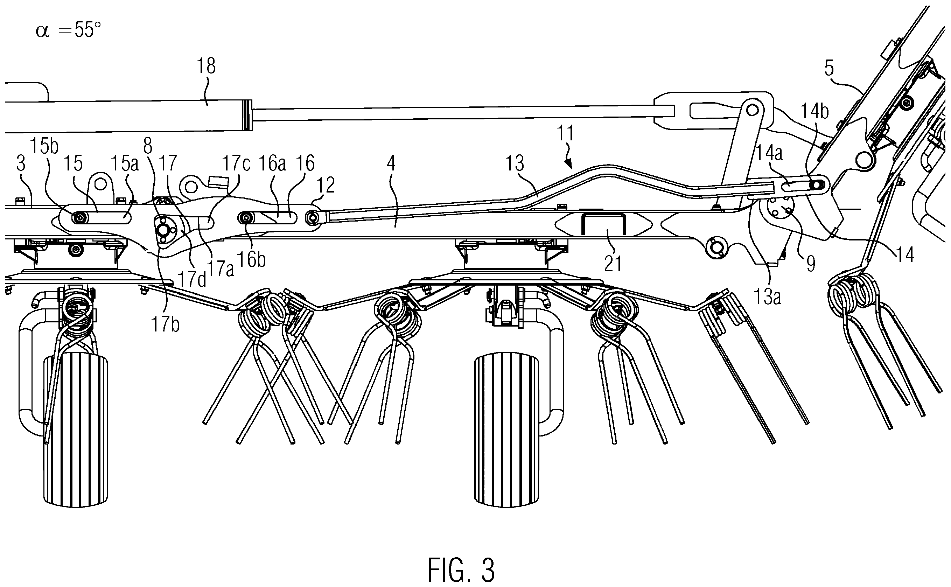

Um die gesetzlich vorgeschriebenen Transportabmessungen einhalten zu können, muss die Heuwerbungsmaschine von der in Fig. 1 gezeigten Arbeitsposition in eine nicht Arbeitsposition, d.h. Transportposition gebracht werden, wobei hier der äußere Seitenrahmenabschnitt 5 um das Gelenk 9 nach oben und zur Mitte in eine Nichtarbeitsstellung geklappt bzw. verschwenkt wird und im Anschluss die Seitenrahmenabschnitte 3,4,5 gemeinsam um das Gelenk 7 nach oben und zur Mitte in eine Endtransportstellung geklappt bzw. verschwenkt werden.Wie insbesondere aus den Fig. 2 und 3 hervorgeht, ist dazu ein Arretiermechanismus 11 vorgesehen, der sich vom inneren Seitenrahmenabschnitt 3 zum äußeren Seitenrahmenabschnitt 5 erstreckt.

Fig. 2 und 3 zeigen einen Zustand der Heuwerbungsmaschine, bei der der äußere Seitenrahmenabschnitt 5 bereits um einen Winkel von 55° um die Drehachse des Gelenks 9 nach oben verschwenkt wurde.

Wie insbesondere der Fig. 2 und 3 zu entnehmen ist, umfasst das längliche Arretierelement ein Verriegelungsblech 12 und eine gelenkig daran befestigte Schubstange 13. Die Schubstange 13 kann dabei um ein Gelenk dessen Achse senkrecht zur Längsachse der Schubstange verläuft relativ zum Verriegelungsblech 12 verschwenkt werden. Das Arretierelement 11 erstreckt sich dabei beidseitig über die Länge des mittleren Seitenrahmenabschnitts 4 hinaus. Eine entsprechende Schubstange 13 mit Verriegelungsblech 12 weist in Arbeitsposition des äußeren Seitenrahmenabschnitts, in Horizontalrichtung betrachtet, beispielsweise eine maximale Länge L in einem Bereich von 1,5 bis 3 m auf, wobei der mittlere Seitenrahmenabschnitt eine geringere Länge P aufweist.

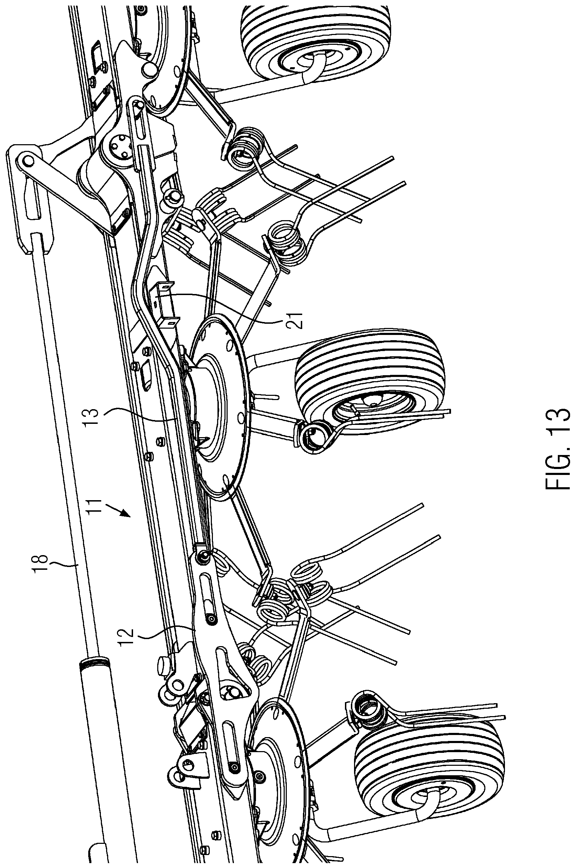

Die Schubstange 13 ist an ihrem vom Verriegelungsblech 12 abgewandten Ende 13a über eine erste Führungseinrichtung 14 mit dem äußeren Seitenrahmenabschnitt 5 verbunden. Die Führungseinrichtung 14 umfasst das Langloch 14a am Ende der Schubstange sowie den Bolzen 14b , der am Rahmenabschnitt 5 befestigt ist und zwar exzentrisch zur Drehachse des Gelenks 9. Somit wird die Schubstange 13 bei Bewegung des äußeren Seitenrahmenabschnitts 5 auf einer Exzenterkurve bewegt. Der Bolzen 14b liegt, wenn man den äußeren Seitenrahmenabschnitt in Arbeitsposition, d.h. in einer im Wesentlichen horizontalen Position, betrachtet (siehe beispielsweise Fig. 1) weiter außen im Vergleich zum Drehgelenk 9 und auch weiter unten als die Drehachse des Drehgelenks 9. Die Schubstange 13 weist einen Knick auf, um eine Kollision mit darunter liegenden Rahmenteilen 21, die in Vorwärtsrichtung von dem mittleren Seitenrahmenabschnitt vorstehen, zu verhindern. (Siehe auch Figur 13). Am nach innen gewandten Ende ist die Schubstange 13 mit dem Verriegelungsblech 12 verbunden. Das Verriegelungsblech 12 ist über eine zweite Führungseinrichtung 15 mit dem inneren Seitenrahmenabschnitt 3 verbunden. Die Führungseinrichtung 15 umfasst dabei ein Langloch 15a in dem Verriegelungsblech 12 sowie einen in dem Langloch laufenden Bolzen 15b, der am inneren Seitenrahmenabschnitt 3 befestigt ist. Die Schubstange kann aber auch gerade ausgeführt werden, wenn ausreichend Platz gegeben ist.

Das Verriegelungsblech 12 ist auch über eine dritte Führungseinrichtung 16 mit dem mittleren Seitenrahmenabschnitt 4 verbunden. Die dritte Führungseinrichtung 16 umfasst ebenfalls ein Langloch 16a sowie einen Bolzen 16b, der am mittleren Seitenrahmenabschnitt 4 befestigt ist und in dem Langloch 16a läuft. Ferner ist hier noch eine vierte Führungseinrichtung 17 vorgesehen, die ebenfalls eine Öffnung 17a im Verriegelungsblech 12 aufweist, sowie einen Bolzen 17b, der sich in diese Öffnung hinein erstreckt. Vorteilhafterweise ist dieser Bolzen ein Gelenkbolzen 17b, der am Drehgelenk 8 angeordnet ist und axial zur Drehachse verläuft.

Die Öffnung 17a weist an ihrem äußeren Bereich einen Langlochabschnitt 17c auf, der sich nach innen hin, hier z.B. trapezförmig zu einem erweiterten Abschnitt 17d erweitert.

In der Arbeitsposition ist das Verriegelungsblech 12 derart angeordnet, dass sich der Bolzen 17b in dem erweiterten Bereich 17d befindet, und somit Bewegungsspielraum in diesem Bereich hat derart, dass der mittlere Seitenrahmenabschnitt 4 relativ zum inneren Seitenrahmenabschnitt 3 beweglich ist. Die Position des Verriegelungsblechs 12 in Figuren 2 und 3 entspricht im Wesentlichen der Stellung in der Arbeitsposition - da die Stange 13 noch nicht nach innen geschoben wurde.

Die Vorrichtung weist weiter einen Hubzylinder 18 auf, über den der äußere Seitenrahmenabschnitt 5 aus seiner Arbeitsposition bis zu etwa 180° in seine Transportposition verschwenkt werden kann, indem der Hubzylinder den äußeren Seitenrahmenabschnitt 5 nach oben und innen zieht.

Der Arretiermechanismus 11 ist derart ausgebildet, dass beim Hochklappen des äußeren Seitenrahmenabschnitts 5 von einer Arbeitsposition in die Transportposition der innere Seitenrahmenabschnitt 3 gegen den mittleren Seitenrahmenabschnitt 4 mechanisch verriegelt wird.

Der Arretiermechanismus 11 wird in Zusammenhang mit dem nachfolgend erläuterten Verfahren näher beschrieben.

Fig. 1 zeigt die Heuwerbungsmaschine in Arbeitsposition. Dabei liegen der Mittelrahmen 2, der innere, mittlere und äußere Seitenrahmenabschnitt 3, 4 und 5 im Wesentlichen auf einer Linie. Die Schubstange 13 und das Verriegelungsblech 12 sind derart angeordnet, dass sie eine Bewegung vom mittleren Seitenrahmenabschnitt 4 zum inneren Seitenrahmenabschnitt 3 nicht blockieren. Die Seitenrahmenabschnitte müssen in Arbeitsstellung untereinander über Gelenke beweglich sein, damit sich die Zinkenkreisel über die Laufräder an die gegebene Topographie anpassen können, um eine gute und schmutzfreie Futteraufnahme zu gewährleisten. Die beiden Langlöcher 15a, 16a der zweiten und dritten Führungseinrichtung 15,16 liegen im Wesentlichen auf der gleichen Höhe. Die Bolzen 15b und 16b liegen im inneren Endbereich der Langlöcher 15a, 16a, wie beispielsweise auch aus Fig. 3 hervorgeht. Der Bolzen 17b liegt ebenfalls im inneren Bereich der Öffnung 17a. Wenn auch aus Fig. 1 nicht ersichtlich, liegt der Bolzen 14b in einem äußeren Bereich des Langlochs 14a.

Soll nun der äußere Seitenrahmenabschnitt aus seiner Transportposition verschwenkt werden, wird, beispielsweise von einer Steuerung, der Hubzylinder 18 betätigt und der äußere Seitenrahmenabschnitt wird nach oben gezogen und klappt nach oben.

Fig. 2 und 3 zeigen einen Klappwinkel (d.h. eine Verschwenkung des äußeren Seitenrahmenabschnitts 5 um das Gelenk 9 relativ zum mittleren Seitenrahmenabschnitt 4) α von 55°. Bei diesem Klappwinkel befindet sich in der ersten Führungseinrichtung der Bolzen 14b im äußeren Bereich des Langlochs. Durch die Schwenkbewegung wurde der Bolzen 14b nach oben bewegt und hat somit auch die Hubstange 13 im Vergleich zur Arbeitsposition nach oben bewegt. Das Verriegelungsblech 12 wurde bislang nicht seitlich verschoben, so dass die Bolzen 15b, 17b und 16b immer noch im inneren Endbereich der entsprechenden Öffnungen 15a, 17a, 16a liegen.

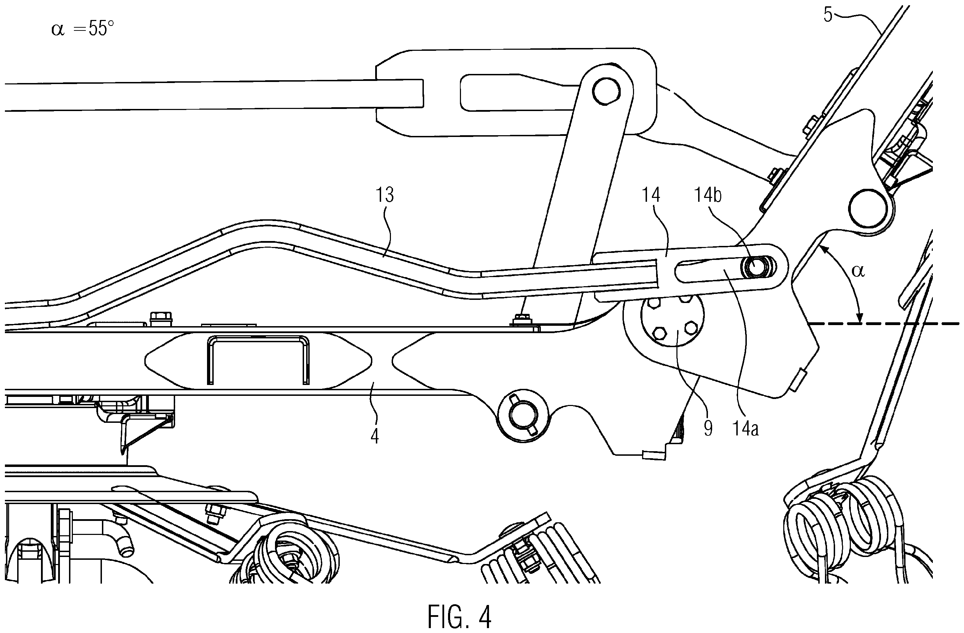

Fig. 4 zeigt die Position des Bolzens 14b im Detail. Mit zunehmendem Klappwinkel α bewegt sich der Bolzen 14b im Langloch 14a nach innen in Richtung des inneren Endes des Langlochs 14a entlang einer Exzenterkurve und hebt somit gleichzeitig die Hubstange 13 weiter nach oben.

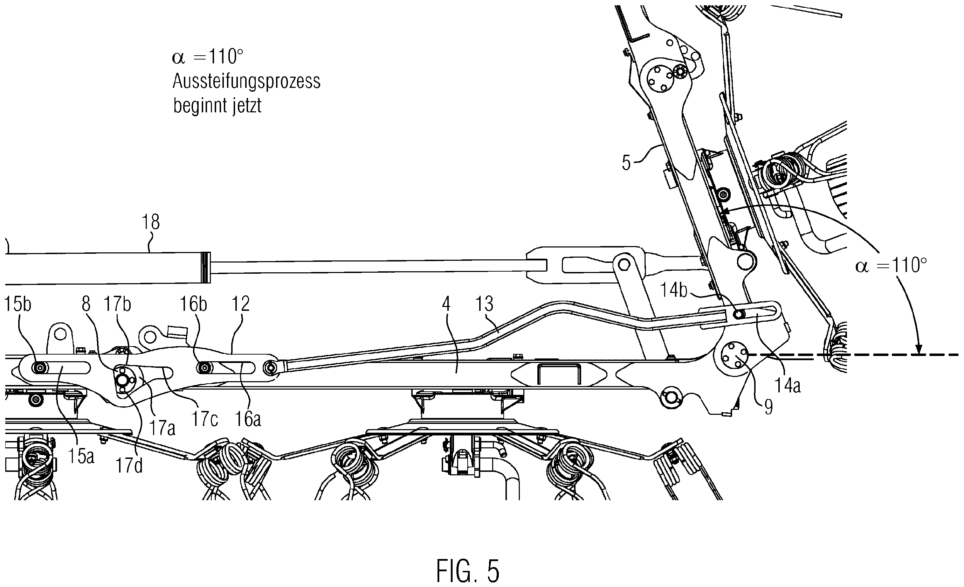

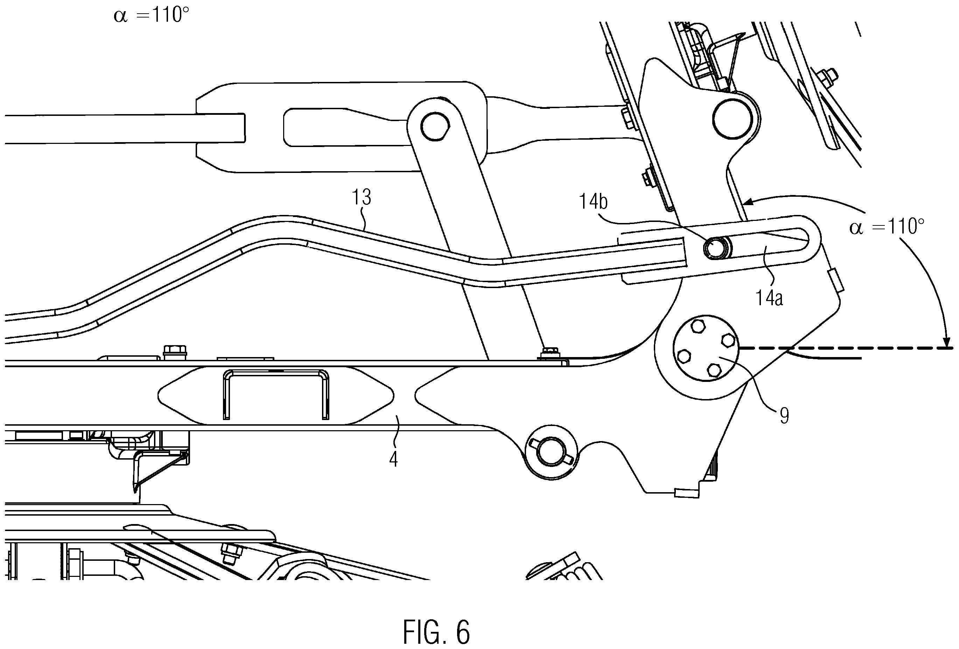

Fig. 5 und 6 zeigen nun einen Winkel α von 110°. In einem Winkelbereich, je nach Auslegung der entsprechenden Führungen von 70 bis 120° befindet sich der Bolzen 14b im Langloch 14a am inneren Endbereich auf Anschlag. In dieser Position liegen die Bolzen 15b, 17b und 16b immer noch im inneren Endbereich. Wird nun der äußere Seitenrahmenabschnitt 5 weiter nach innen geklappt, so beginnt der Bolzen 14b gegen das innere Ende des Langlochs 14a zu drücken und schiebt die Stange 13 nach innen (d.h. die Bewegungsrichtung weist zumindest einen Richtungsvektor auf der in Horizontalrichtung nach innen gerichtet ist). Der Aussteifungsprozess beginnt somit erst jetzt.

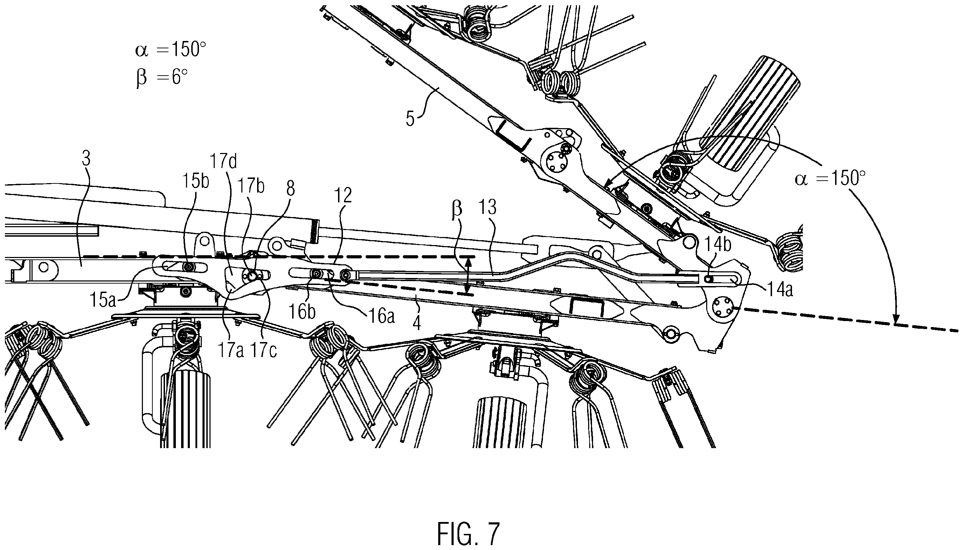

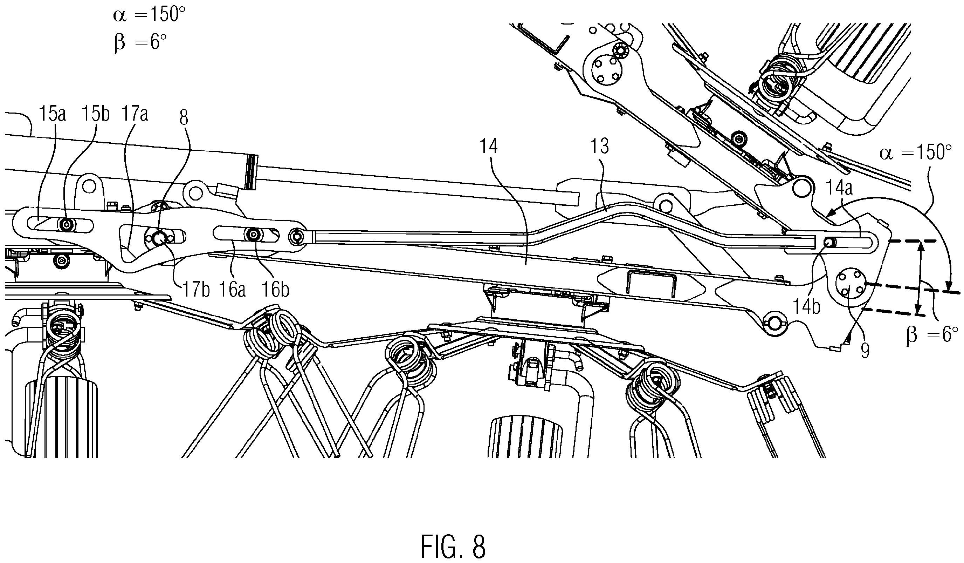

Fig. 7 und 8 zeigen einen Klappwinkel α von 150°. Hier kann man erkennen, dass der Bolzen 14b die Stange 13 und somit das Verriegelungsblech 12 bereits nach innen verschoben hat und die Bolzen 15b, 17b und 16b sich bereits in einem mittleren Bereich der Langlöcher 15a, 16a sowie der Öffnung 17a befinden. Der Bolzen 17b befindet sich jedoch noch nicht in dem Langlochabschnitt 17c, so dass das Gelenk 8 noch einen Bewegungsspielraum hat. Durch die Bewegung der Schubstange 13 wird der Rahmenabschnitt 4 nach unten um einen Winkel von hier z.B. 6° um das Gelenk 8 verschwenkt, insbesondere bedingt durch die Führungen 15, 16, 17 sowie durch die Gewichtskraft des Seitenrahmenabschnitts 5, die auf den mittleren Seitenrahmenabschnitt 4 wirkt. Der innere Seitenrahmenabschnitt wird dadurch ebenfalls leicht angehoben.

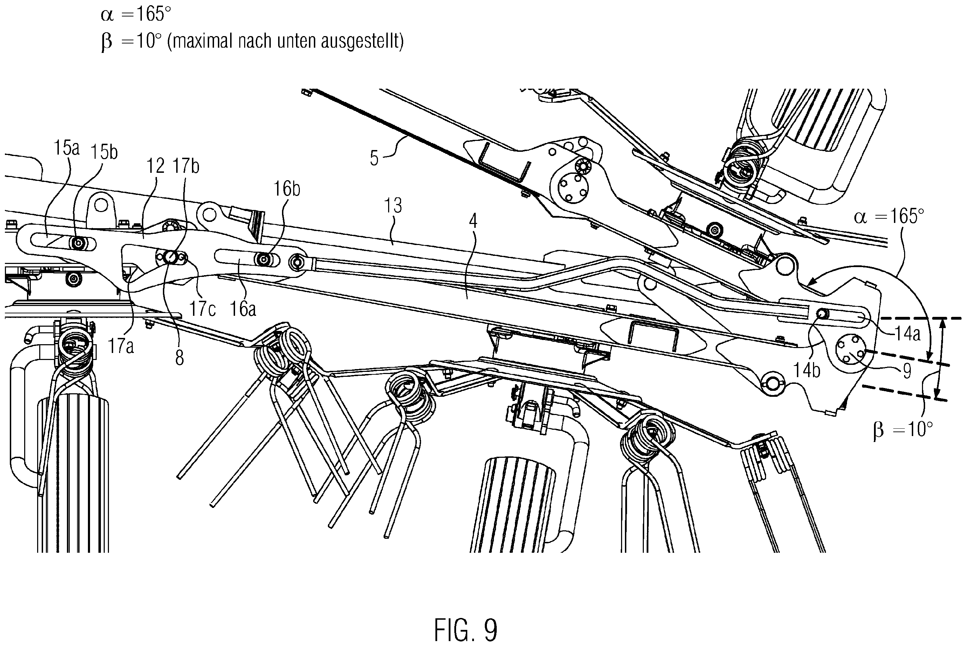

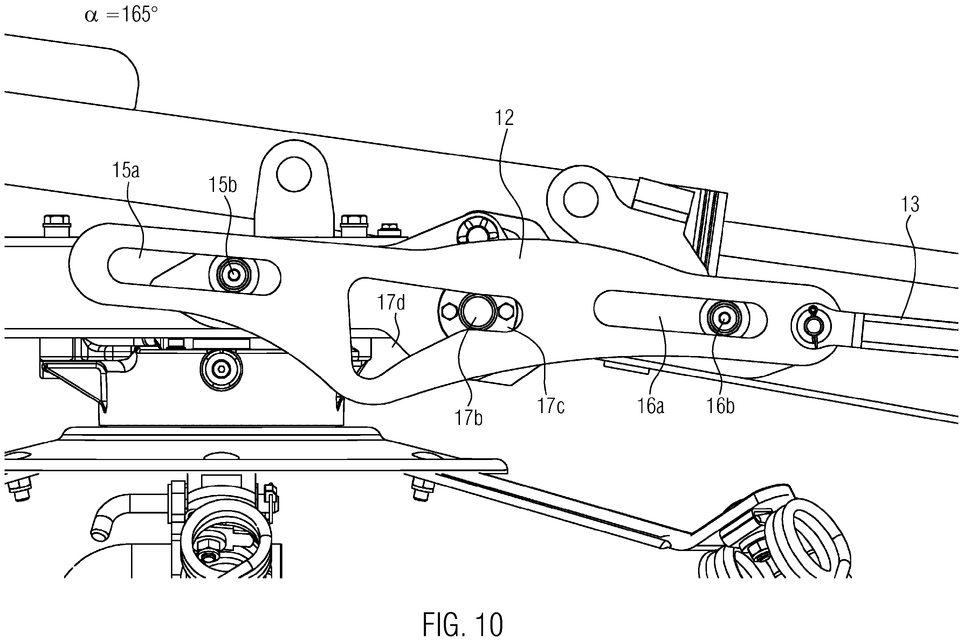

Fig. 9 und 10 zeigen einen Klappwinkel α von 165°. Der Bolzen 14b befindet sich immer noch auf Anschlag im Langloch 14a. Die Bolzen 15b und 16b befinden sich nun im äußeren Bereich des Langlochs 15a und 16a. Der Bolzen 17b erreicht nun den verengten Langlochabschnitt 17c der Öffnung 17a. Der mittlere Seitenrahmenabschnitt 4 ist nun etwa 10° relativ zu seiner Position in Arbeitsstellung nach unten verschwenkt, wodurch der innere Seitenrahmenabschnitt leicht angehoben wurde. Nun ist der maximale Winkel β erreicht, so dass sich hier das Verriegelungsblech 12 nun in der Verriegelungsposition befindet. Aufgrund der Dreipunktlagerung (durch Bolzen 15b, 17b und 16b) können der innere Seitenrahmenabschnitt 3 und der mittlere Seitenrahmenabschnitt 4 nicht mehr relativ zueinander über das Gelenk 8 verschwenkt werden. Das Gelenk 8 ist somit steif.

In Fig. 9 und 10 befinden sich die Bolzen 15b, 17b und 16b noch nicht am äußeren Anschlag der Öffnungen, da der äußere Seitenrahmenabschnitt 5 noch weiter nach innen geklappt werden muss.

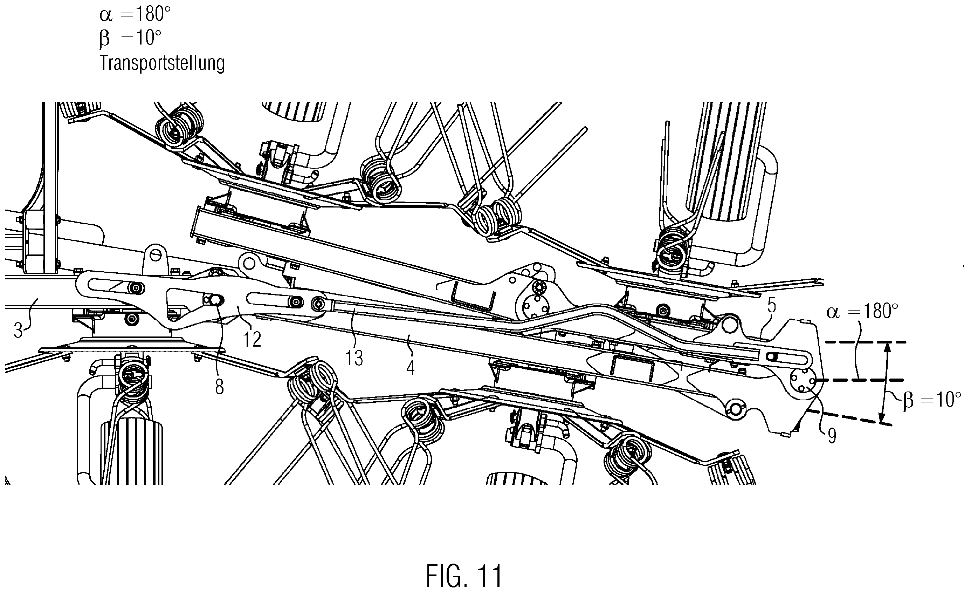

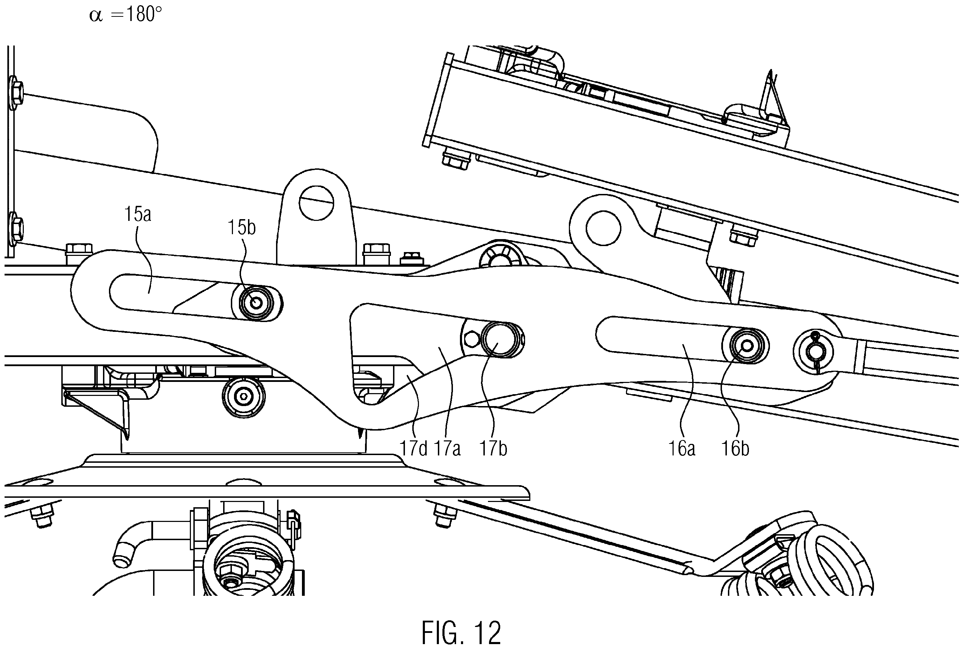

Wie aus Fig. 11 und 12 hervorgeht, wird der äußere Seitenrahmenabschnitt 5 schließlich bis zu einen Winkel α von 180° nach innen geklappt. Dabei wird das Verriegelungsblech 12 noch weiter zur Mitte hin verschoben, derart, dass sich nun die Bolzen 15b, 17b und 16b am äußeren Ende der Öffnungen 15a, 17a, 16a befinden. Der mittlere Seitenrahmenabschnitt 4 kann sich bei einer weiteren Schwenkbewegung zwischen 165 und 180° jedoch nicht weiter um das Gelenk 8 nach unten verschwenken. Das bedeutet, dass sobald das Verriegelungsblech 12 in der Verriegelungsposition ist, auch bei einer weiteren Klappbewegung des äußeren Seitenrahmenabschnitts 5 das Verriegelungsblech in einer Verriegelungsposition bleibt und der innere Seitenrahmenabschnitt sich nicht weiter um das Gelenk 8 drehen kann. Vorteilhafterweise befindet sich das Verriegelungsblech 12 in einer Verriegelungsposition, wenn der äußere Seitenrahmenabschnitt 5 um einen Winkel α von 100° bis 170 °verschwenkt wurde.

In Fig. 11 und Fig.12 befindet sich der äußere Seitenrahmenabschnitt in seiner eingeklappten Transportposition.

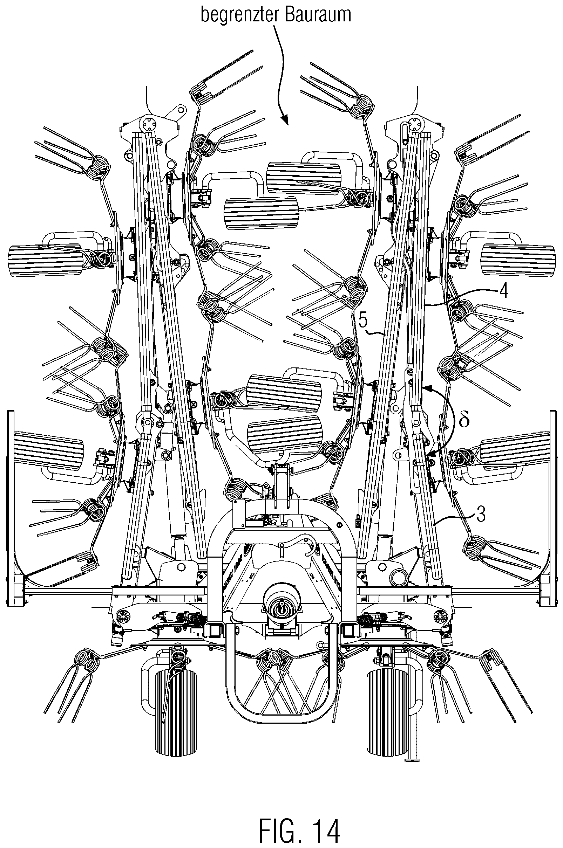

Wenn beide äußeren Rahmenabschnitte links und rechts nach innen geklappt wurden, und die Heuwerbungsmaschine noch immer nicht die gesetzlich erforderlichen Abmessungen aufweist, können, wie allgemein bekannt, die Seitenrahmenabschnitte 3, 4, 5 über das Gelenk 7 senkrecht nach oben in eine Endtransportposition geklappt werden, wie in Fig. 14 gezeigt ist.

Wie aus Fig. 14 und 15a hervorgeht, ergibt sich aufgrund des Winkels β, unter dem der mittlere Seitenrahmenabschnitt 4 zum inneren Seitenrahmenabschnitt 3 geneigt ist, eine verringerte maximale Breite. Wenn der Winkel δ beispielsweise größer als 170° wird, bewegt sich der Seitenrahmen aufgrund des begrenzten Bauraums in der Mitte der Heuwerbungsmaschine nach außen. Die zulässige maximale Breite darf jedoch nicht überschritten werden. Fig. 15b zeigt beispielsweise eine Endtransportstellung ohne Aussteifung, d.h. einen Winkel δ von 190°. Hier ergibt sich im Vergleich zu den Fig. 14 und 15a eine größere Breite bei sonst gleichen Abmessungen.

## Patentansprüche

1. Heuwerbungsmaschine (1) mit einem Mittelrahmen (2) an dessen beiden Seiten ein innerer Seitenrahmenabschnitt (3), ein mittlerer Seitenrahmenabschnitt (4) und ein äußerer Seitenrahmenabschnitt (5) angeordnet sind, die über Gelenke (8, 9) miteinander verbunden sind, und einen Arretiermechanismus (11), der ein längliches Arretierelement (12, 13) umfasst, das sich vom inneren Seitenrahmenabschnitt (3) zum äußeren Seitenrahmenabschnitt (5) erstreckt und **dadurch gekennzeichnet ist, dass** beim Hochklappen des äußeren Seitenrahmenabschnitts (5) von einer Arbeitsposition in eine Transport- oder Nichtarbeitsstellung das längliche Arretierelement (12, 13) durch den äußeren Seitenrahmenabschnitt (5) nach innen in eine Verriegelungsposition verschoben wird, indem der äußere Seitenrahmenabschnitt eine Kraft auf das längliche Arretierelement ausübt, wobei der innere Seitenrahmenabschnitt (3) gegen den mittleren Seitenrahmenabschnitt (4) automatisch mechanisch verriegelt wird.

2. Heuwerbungsmaschine nach Anspruch 1, **dadurch gekennzeichnet, dass** beim Zurückklappen des äußeren Seitenrahmenabschnitts (5) von der Transport- oder Nichtarbeitsstellung in die Arbeitsstellung die Verriegelung wieder automatisch mechanisch freigegeben wird.

3. Heuwerbungsmaschine nach Anspruch 1 oder 2, **dadurch gekennzeichnet, dass** das längliche Arretierelement (12, 13) ein Verriegelungsblech (12) und eine daran befestigte Schubstange (13) umfasst.

4. Heuwerbungsmaschine nach Anspruch 3, **dadurch gekennzeichnet, dass** das Verriegelungsblech (12) mit der daran befestigten Schubstange (13) länger ist als der mittlere Seitenrahmenabschnitt (4) und insbesondere eine Länge in einem Bereich von 1,5 bis 3,0 m aufweist.

5. Heuwerbungsmaschine nach mindestens Anspruch 3 oder 4, **dadurch gekennzeichnet, dass**
die Schubstange (13) an ihrem vom Verriegelungsblech (12) abgewandten Ende (13a) über eine erste Führungseinrichtung (14) mit dem äußeren Seitenrahmenabschnitt (5) verbunden ist und
das Verriegelungsblech (12) über eine zweite Führungseinrichtung (15) mit dem inneren Seitenrahmenabschnitt und
über eine dritte Führungseinrichtung (16) mit dem mittleren Seitenrahmenabschnitt (4) verbunden ist.

6. Heuwerbungsmaschine nach Anspruch 5, **gekennzeichnet durch** eine vierte Führungseinrichtung (17), die zwischen der ersten und zweiten Führungseinrichtung (14, 15) angeordnet ist.

7. Heuwerbungsmaschine nach mindestens einem der Ansprüche 5 oder 6, **dadurch gekennzeichnet, dass** die erste Führungseinrichtung ein Langloch (14a) in der Schubstange (13) umfasst, in dem ein Bolzen (14b) des äußeren Rahmenabschnitts (5) geführt wird, wobei der Bolzen (14b) exzentrisch zu dem Drehgelenk (9), das zwischen dem mittleren (4) und dem äußeren (5) Seitenrahmenabschnitt liegt, angeordnet ist, und/oder
die dritte Führungseinrichtung (16) ein Langloch (16a) im Verriegelungsblech (12) umfasst, in dem ein Bolzen (16b) des mittleren Rahmenabschnitts (4) geführt wird und/oder
die zweite Führungseinrichtung (15) ein Langloch (15a) umfasst, in dem ein Bolzen (15b) des inneren Seitenrahmenabschnitts (3) geführt wird.

8. Heuwerbungsmaschine nach mindestens Anspruch 6, **dadurch gekennzeichnet, dass** die vierte Führungseinrichtung (17) eine Führungsöffnung (17a) aufweist, mit einem Langlochabschnitt (17c) und einem erweiterten Abschnitt (17d), dessen Höhe sich nach innen erweitert, wobei der Bolzen (17b) vorzugsweise ein Bolzen des inneren und/oder mittleren Seitenrahmenabschnitts (3, 4) ist und vorzugsweise ein Gelenkbolzen des Gelenks (8) zwischen dem inneren und mittleren Seitenrahmenabschnitt (3, 4) ist.

9. Heuwerbungsmaschine nach mindestens Anspruch 5, **dadurch gekennzeichnet, dass** die Führungseinrichtungen (14, 15, 16) derart ausgebildet sind, dass bei einer Schwenkbewegung des äußeren Seitenrahmenabschnitts (5) nach oben ab einem ersten Klappwinkel α, insbesondere von 70 bis 120° die Schubstange (13) nach Innen geschoben wird und sich dabei der mittlere Seitenrahmenabschnitt (4) um das Gelenk (8) zwischen dem inneren und mittleren Seitenrahmenabschnitt um einen Winkel β, vorzugsweise um 3° - 20°, insbesondere 5° - 15° nach unten verschwenken kann.

10. Heuwerbungsmaschine nach mindestens einem der Ansprüche 1-9, **dadurch gekennzeichnet, dass** der äußere Seitenrahmenabschnitt (5) mehrere, hier insbesondere zwei Rahmenteile (5a,b) umfasst, die über ein Gelenk (10) miteinander verbunden sind.

11. Heuwerbungsmaschine nach mindestens Anspruch 3 und 8, **dadurch gekennzeichnet, dass** der innere Seitenrahmenabschnitt (3) gegen den mittleren Seitenrahmenabschnitt(4) mechanisch verriegelt wird, wenn das Verriegelungsblech (12) von der Schubstange (13) in eine Verriegelungsposition verschoben wurde, insbesondere wenn der Bolzen (17b) der vierten Führungseinrichtung in einer Verriegelungsposition in dem Langlochabschnitt (17c) der vierten Führungseinrichtung liegt.

12. Verfahren zum Klappen eines Seitenrahmenabschnitts einer Heuwerbungsmaschine nach mindestens einem der Ansprüche 1-11 von einer Arbeitsstellung in eine Transport- oder Nichtarbeitsstellung, **dadurch gekennzeichnet, dass** beim Hochklappen des äußeren Seitenrahmenabschnitts (5) das längliche Arretierelement (12, 13) von dem äußeren Seitenrahmenabschnitt (5) nach innen in eine Verriegelungsposition geschoben wird, indem der äußere Seitenrahmenabschnitt eine Kraft auf das längliche Arretierelement ausübt, derart, dass der innere Seitenrahmenabschnitt (3) gegen den mittleren Seitenrahmenabschnitt (4) automatisch mechanisch verriegelt wird.

13. Verfahren nach Anspruch 12, **dadurch gekennzeichnet, dass** das längliche Arretierelement (12, 13) ein Verriegelungsblech (12) und eine daran befestigte Schubstange (13) umfasst und dass bei der Schwenkbewegung des äußeren Seitenrahmenabschnitts (5) nach oben ab einem ersten Klappwinkel α, insbesondere von 70° bis 120°, die Schubstange (13) des Arretiermechanismus (11) so geführt wird, dass sie nach innen geschoben wird und sich dabei der mittlere Seitenrahmenabschnitt (4) um das Gelenk (8), das zwischen dem inneren (3) und mittleren (4) Seitenrahmenabschnittliegt, um einen vorbestimmten Winkel β von vorzugsweise 3-20°, insbesondere 5° bis 15° nach unten verschwenkt, bis das Verriegelungsblech (12) in eine Verriegelungsposition gebracht wird.

14. Verfahren nach mindestens Anspruch 12, **dadurch gekennzeichnet, dass** beim Hochklappen des äußeren Seitenrahmenabschnitts (5) der Bolzen (14b) in dem Langloch (14a) zu dem nach innen gewandten Ende des Langlochs (14a) läuft und dann die Stange (13) durch die Bewegung des Bolzens (14b) nach innen verschoben wird, wobei sich das Verriegelungsblech (12) derart nach innen verschiebt, dass die Position der Bolzen (15b, 16b) der zweiten und dritten Führungseinrichtung (15, 16) relativ zum äußern Ende der Langlöcher (16a) hin bewegt wird und
die Position der Bolzen (17b) der vierten Führungseinrichtung (17) in eine Verriegelungsposition, insbesondere in den Langlochabschnitt (17c) der Führungsöffnung (17a) gebracht wird.

15. Verfahren nach mindestens einem der vorherigen Ansprüche 12-14, **dadurch gekennzeichnet, dass** das längliche Arretierelement (12, 13) ein Verriegelungsblech (12) und eine daran befestigte Schubstange (13) umfasst, und dass, wenn der äußere Seitenrahmenabschnitt (5) um einen Winkel α von 100-170° verschwenkt wurde, die Verriegelungsposition des Verriegelungsblechs (12) erreicht ist.

## Claims

1. Haymaking machine (1) having a central frame (2) on both sides of which an inner side frame portion (3), a middle side frame portion (4) and an outer side frame portion (5) are arranged, which are connected to each other via hinges (8, 9, 10), and a locking mechanism (11) comprising an elongated locking element (12, 13) extending from the inner side frame portion (3) to the outer side frame portion (5), and is **characterized in that** when the outer side frame portion (5) is folded upwards from a working position into a transport or non-working position, the elongated locking element (12, 13) is displaced by the outer side frame portion (5) inwards into a locking position by the outer side frame portion (3) exerting a force on the elongated locking element, wherein the inner side frame portion (3) is automatically mechanically locked against the middle side frame portion (4).

2. Haymaking machine according to claim 1, **characterized in that** when folding back the outer side frame portion (5) from the transport or non-working position into the working position, the lock is again released automatically mechanically.

3. Haymaking machine according to claim 1 or 2, **characterized in that** the elongated locking element (12, 13) comprises a locking plate (12) and a push rod (13) attached thereto.

4. Haymaking machine according to claim 3, **characterized in that** the locking plate (12) with the push rod (13) attached thereto is longer than the middle side frame portion (4) and in particular has a length in a range of 1.5 to 3.0 m.

5. Haymaking machine according to at least claim 3 or 4, **characterized in that** the push rod (13) at its end (13a) facing away from the locking plate (12) is connected via a first guide device (14) to the outer side frame portion (5) and
the locking plate (12) is connected via a second guide device (15) to the inner side frame portion and
via a third guide device (16) to the middle side frame section (4).

6. Haymaking machine according to claim 5, **characterized by** a fourth guide device (17) which is arranged between the first and second guide device (15, 16).

7. Haymaking machine according to at least one of claims 5 or 6, **characterized in that** the first guide device comprises an elongated hole (14a) in the push rod (13), in which a bolt (13b) of the outer frame portion (5) is guided, wherein the bolt (13b) is arranged eccentrically to the hinge joint (9) which lies between the middle (4) and the outer (5) side frame portion, and/or
the third guide device (16) comprises an elongated hole (16a) in the locking plate (12) in which a bolt (16b) of the middle frame portion (4) is guided and/or
the second guide device (15) comprises an elongated hole (15a) in which a bolt (15b) of the inner side frame portion (3) is guided.

8. Haymaking machine according to at least claim 6, **characterized in that** the fourth guide device (17) has a guide opening (17a), with an elongated hole portion (17c) and an extended portion (17d), the height of which widens inwardly, wherein the bolt (17b) is preferably a bolt of the inner and/or middle side frame portion (3, 4) and is preferably a hinge pin of the hinge (8) between the inner and middle side frame portion (3, 4).

9. Haymaking machine according to at least claim 5, **characterized in that** the guide devices (14, 15, 16) are configured such that upon pivotal movement of the outer side frame portion (5) upwards from a first folding angle α, in particular from 70° to 120°, the push rod (13) is pushed inwards and thereby the middle side frame portion (4) can pivot downwards around the hinge (8) between the inner and middle side frame portion by an angle β, preferably by 3°-20°, in particular 5°-15°.

10. Haymaking machine according to at least one of claims 1-9, **characterized in that** the outer side frame portion (5) comprises plural, here in particular two, frame parts (5a, b), which are connected to each other via a hinge (10).

11. Haymaking machine according to at least claim 3 and 8, **characterized in that** the inner side frame portion (3) is mechanically locked against the middle side frame portion (4) when the locking plate (12) has been moved by the push rod (13) into a locking position, especially if the bolt (17b) of the fourth guide device lies in a locking position in the elongated hole portion (17c) of the fourth guide device.

12. Method for folding a side frame portion of a haymaking machine according to at least one of claims 1-11 from a working position into a transport or non-working position, **characterized in that**, when folding up the outer side frame portion (5), the elongated locking element (12, 13) is pushed from the outer side frame portion (11) inwardly into a locking position by the outer side frame portion exerting a force on the elongated locking element such that inner side frame portion (3) is automatically mechanically locked against the middle side frame portion (4).

13. Method according to claim 12, **characterized in that** the elongated locking element (12, 13) comprises a locking plate (12) and a push rod (13) attached thereto, and that during the pivotal movement of the outer side frame portion (5) upwards from a first folding angle α, in particular from 70° to 120°, the push rod (13) of the locking mechanism (11) is guided such that it is pushed inwards and thereby the middle side frame portion (4) pivots around the hinge (8), which lies between the inner (3) and middle (4) side frame portion, by a predetermined angle β of preferably 3-20°, in particular 5°-15°, downwards until the locking plate (12) is brought into a locking position.

14. Method according to at least claim 12, **characterized in that** when folding up the outer side frame portion (5) the bolt (14b) in the elongated hole (14a) runs to the inwardly oriented end of the elongated hole (14a) and then the rod (13) is displaced inwardly by the movement of the bolt (14b), wherein the locking plate (12) moves inwardly such that the position of the bolts (15b, 16b) of the second and third guide device (15, 16) is moved relative to the outer end of the elongated holes (16a) and
the position of the bolt (17b) of the fourth guide device (17) is brought into a locking position, in particular into the elongated hole portion (17c) of the guide opening (17a).

15. Method according to at least one of the preceding claims 12-14, **characterized in that** the elongated locking element (12, 13) comprises a locking plate (12) and a push rod (13) attached thereto and that, when the outer side frame portion (5) has been pivoted by an angle α of 100-170°, the locking position of the locking plate (12) is reached.

## Revendications

1. Machine de fenaison (1) comprenant un bâti médian (2) sur les deux côtés duquel sont agencées une partie de bâti latéral intérieure (3), une partie de bâti latéral moyenne (4) et une partie de bâti latéral extérieure (5) qui sont reliées les unes aux autres par des articulations (8, 9), ainsi qu'un mécanisme de blocage (11) qui comprend un élément de blocage allongé (12, 13) qui s'étend de la partie de bâti latéral intérieure (3) vers la partie de bâti latéral extérieure (5), et
**caractérisée en ce que**, lors du repliage vers le haut de la partie de bâti latéral extérieure (5) d'une position de travail dans une position de transport ou de non fonctionnement, la partie de bâti latéral extérieure (5), exerçant une force sur l'élément de blocage allongé (12, 13), déplace l'élément de blocage allongé vers l'intérieur dans une position de verrouillage, dans laquelle la partie de bâti latéral intérieure (3) est automatiquement verrouillée mécaniquement vis-à-vis de la partie de bâti latéral moyenne (4).

2. Machine de fenaison selon la revendication 1, **caractérisée en ce que**, lors du dépliage de la partie de bâti latéral extérieure (5) de la position de transport ou de non fonctionnement dans la position de travail, le verrouillage est débloqué mécaniquement à nouveau de manière automatique.

3. Machine de fenaison selon la revendication 1 ou 2, **caractérisée en ce que** l'élément de blocage allongé (12, 13) comprend une tôle de verrouillage (12) et une barre d'entraînement (13) fixée sur celle-ci.

4. Machine de fenaison selon la revendication 3, **caractérisée en ce que** la tôle de verrouillage (12) avec la barre d'entraînement (13) fixée sur elle est plus longue que la partie de bâti latéral moyenne (4) et, notamment, a une longueur comprise entre 1,5 m et 3,0 m.

5. Machine de fenaison selon au moins la revendication 3 ou 4, **caractérisée en ce que** la barre d'entraînement (13) est reliée à la partie de bâti latéral extérieure (5) par le biais d'un premier dispositif de guidage (14) au niveau de son extrémité (13a) éloignée de la tôle de verrouillage (12), et
la tôle de verrouillage (12) est reliée à la partie de bâti latéral intérieure par le biais d'un deuxième dispositif de guidage (15) et à la partie de bâti latéral moyenne (4) par le biais d'un troisième dispositif de guidage (16).

6. Machine de fenaison selon la revendication 5, **caractérisée par** un quatrième dispositif de guidage (17) qui est situé entre le premier et le deuxième dispositif de guidage (14, 15).

7. Machine de fenaison selon au moins une des revendications 5 ou 6, **caractérisée en ce que** le premier dispositif de guidage comprend un trou oblong (14a) dans la barre d'entraînement (13), dans lequel un axe (14b) de la partie de bâti latéral extérieure (5) est guidé, dans laquelle l'axe (14b) a une position excentrique par rapport à l'articulation tournante (9) qui se trouve entre la partie de bâti latéral moyenne (4) et la partie de bâti latéral extérieure (5), et/ou
le troisième dispositif de guidage (16) comprend un trou oblong (16a) dans la tôle de verrouillage (12), dans lequel un axe (16b) de la partie de bâti moyenne (4) est guidé et/ou le deuxième dispositif de guidage (15) comprend un trou oblong (15a) dans lequel un axe (15b) de la partie de bâti latéral intérieure (3) est guidé.

8. Machine de fenaison selon au moins la revendication 6, **caractérisée en ce que** le quatrième dispositif de guidage (17) comporte une ouverture de guidage (17a) qui présente une partie formant trou oblong (17c) et une partie élargie (17d) dont la hauteur augmente en allant vers l'intérieur, dans laquelle l'axe (17b) est, de préférence, un axe de la partie de bâti latéral intérieure et/ou moyenne (3, 4) et, de préférence, un axe d'articulation de l'articulation (8) entre les parties de bâti latéral intérieure et moyenne (3, 4).

9. Machine de fenaison selon au moins la revendication 5, **caractérisée en ce que** les dispositifs de guidage (14, 15, 16) sont conçus de manière à ce que, lors d'un mouvement de pivotement de la partie de bâti latéral extérieure (5) vers le haut, et à partir d'un premier angle de repliage α, notamment de 70° à 120°, la barre d'entraînement (13) soit poussée vers l'intérieur et que, dans le même temps, la partie de bâti latéral moyenne (4) puisse pivoter vers le bas d'un angle β, de préférence de 3° à 20°, notamment de 5° à 15°, autour de l'articulation (8) située entre les parties de bâti latéral intérieure et moyenne.

10. Machine de fenaison selon au moins une des revendications 1-9, **caractérisée en ce que** la partie de bâti latéral extérieure (5) comprend plusieurs, dans le cas présent notamment deux, éléments de bâti (5a,b) qui sont reliés les uns aux autres par une articulation (10).

11. Machine de fenaison selon au moins les revendications 3 et 8, **caractérisée en ce que** la partie de bâti latéral intérieure (3) est verrouillée mécaniquement vis-à-vis de la partie de bâti latéral moyenne (4) lorsque la tôle de verrouillage (12) a été déplacée dans une position de verrouillage par la barre d'entraînement (13), notamment lorsque l'axe (17b) du quatrième dispositif de verrouillage se trouve dans une position de verrouillage dans la partie formant trou oblong (17c) du quatrième dispositif de verrouillage.

12. Procédé de repliage d'une partie de bâti latéral d'une machine de fenaison selon au moins une des revendications 1-11 d'une position de travail dans une position de transport ou de non fonctionnement, **caractérisé en ce que**, lors du repliage vers le haut de la partie de bâti latéral extérieure (5), la partie de bâti latéral extérieure (5), exerçant une force sur l'élément de blocage allongé (12, 13), pousse l'élément de blocage allongé vers l'intérieur dans une position de verrouillage, de sorte que la partie de bâti latéral intérieure (3) soit automatiquement verrouillée mécaniquement vis-à-vis de la partie de bâti latéral moyenne (4).

13. Procédé selon la revendication 12, **caractérisé en ce que** l'élément de blocage allongé (12, 13) comprend une tôle de verrouillage (12) et une barre d'entraînement (13) fixée sur celle-ci, et **en ce que**, lors du mouvement de pivotement de la partie de bâti latéral extérieure (5) vers le haut, et à partir d'un premier angle de repliage α, notamment de 70° à 120°, la barre d'entraînement (13) du mécanisme de blocage (11) est guidée de sorte à être poussée vers l'intérieur et que, dans le même temps, la partie de bâti latéral moyenne (4) pivote vers le bas d'un angle β prédéterminé, de préférence de 3° à 20°, notamment de 5° à 15°, autour de l'articulation (8) située entre les parties de bâti latéral intérieure (3) et moyenne (4), jusqu'à ce que la tôle de verrouillage (12) soit amenée dans une position de verrouillage.

14. Procédé selon au moins la revendication 12, **caractérisé en ce que**, lors du repliage vers le haut de la partie de bâti latéral extérieure (5), l'axe (14b) dans le trou oblong (14a) se déplace vers l'extrémité du trou oblong (14a) tournée vers l'intérieur et la barre (13) est alors déplacée vers l'intérieur par le mouvement de l'axe (14b), dans lequel la tôle de verrouillage (12) se déplace vers l'intérieur, de sorte que la position des axes (15b, 16b) du deuxième et du troisième dispositif de guidage (15, 16) est déplacée par rapport à l'extrémité extérieure des trous oblongs (16a), dans leur direction, et la position de l'axe (17b) du quatrième dispositif de guidage (17) est amenée dans une position de verrouillage, notamment dans la partie formant trou oblong (17c) de l'ouverture de guidage (17a).

15. Procédé selon au moins une des revendications précédentes 12-14, **caractérisé en ce que** l'élément de blocage allongé (12, 13) comprend une tôle de verrouillage (12) et une barre d'entraînement (13) fixée sur celle-ci, et **en ce que**, lorsque la partie de bâti latéral extérieure (5) a pivoté d'un angle α de 100° à 170°, la position de verrouillage de la tôle de verrouillage (12) est atteinte.
